Europäisches Patentamt

European Patent Office

Office européen des brevets

(11) Publication number: **0 151 163**
**B1**

# (12) EUROPEAN PATENT SPECIFICATION

(45) Date of publication of patent specification: **23.09.87**

(51) Int. Cl.⁴: **F 16 L 33/08**

(21) Application number: **84902836.0**

(22) Date of filing: **09.07.84**

(86) International application number:
**PCT/SE84/00256**

(87) International publication number:
**WO 85/00416 31.01.85 Gazette 85/03**

(54) HOSE CLAMP.

(30) Priority: **08.07.83 SE 8303900**

(43) Date of publication of application:
**14.08.85 Bulletin 85/33**

(45) Publication of the grant of the patent:
**23.09.87 Bulletin 87/39**

(84) Designated Contracting States:
**AT BE CH DE FR GB LI LU NL SE**

(56) References cited:
**CH-A- 232 976**
**CH-A- 287 656**
**DE-C- 865 085**
**SE-C- 119 716**
**SE-C- 171 897**

(73) Proprietor: **ABA of Sweden AB**
**Scheelegatan 28**
**S-112 28 Stockholm (SE)**

(72) Inventor: **RIBRANT, Sven**
**Röhällvägen**
**S-386 00 Färjestaden (SE)**
Inventor: **FINCK, Klaus**
**St. Esplanadgatan 27**
**S-803 51 Gävle (SE)**

(74) Representative: **Ryrlén, Evert et al**
**ALFONS HEDBERGS PATENTBYRÅ AB**
**Aschebergsgatan 35**
**S-411 33 Göteborg (SE)**

Courier Press, Leamington Spa, England.

## Description

The subject invention relates to an improved hose clamp of the kind comprising a steel strip which is bent to annular shape with the ends of the strip overlapping, the radially outer end portion of the strip being formed with a threaded passageway having transverse grooves in which engage the threads of a screw worm, the latter being rotatably journalled in a sleeve but axially non-slidable therein, said sleeve enclosing the screw worm and comprising a space allowing the outer strip end portion to be displaced through the sleeve between the inner strip end portion and the worm by rotating the latter.

In hose clamps of the kind outlined above the radially inner strip end portion must be secured relative to the screw worm sleeve. Usually, as shown in DE—C—865085 interlocking of these components is effected by cooperation between a notch punched in the inner strip end portion and an upset portion of the worm sleeve in engagement with said notch. The upset portion extending towards the interior of the sleeve must be given a well-defined vertical edge face in order to bring about the desired secure engagement thereof in the notch. Consequently, the tools used to form the interlocking means must meet very strict demands on exactness as the manufacture is fully automated and performed at the very high speeds.

For the purpose of providing the interlocking effect between the inner strip end portion and the worm sleeve in a simpler manner it has been suggested to provide the inner strip end portion with stamped sections at each end of the worm sleeve and with downwardly bent sections which form a back-up face to the worm sleeve when the punched edge face abuts against the latter. However, this solution has proved disadvantageous because when the hose clamp is tightened about a hose of an elastic material the latter has a tendency to force the locking parts of the inner strip end portion outwards out of their engagement with the end edges of the worm sleeve. This is due to the possibility of vertical strap play at the end edges of the sleeve, which is partly due to the necessity of allowing space to permit simple insertion of the outer strip end portion into the worm sleeve.

The purpose of the subject invention is to provide interlocking means which allow safe securement of the worm sleeve relative to the inner strip end portion and which may be manufactured at a high rate of production and in a considerably more convenient manner than is the case of prior-art locking means devised for the purpose.

In the invention the part of the inner strip end portion which is closest to the lengthwise axis of the screw worm is provided in a section across the width with a punched opening and the invention is characterised in the inner strip portion having an upset portion positioned on the side of the punched portion which is closest to the free end of the inner strip end portion, said upset portion being positioned in a notch formed in the radially inner one of the walls of the worm sleeve, whereby an edge formed by said notch in said worm sleeve wall forms an abutment face against the edge face of said upset portion.

One embodiment of the invention will be described in closer detail in the following with reference to the accompanying drawings, wherein

Fig. 1 is a lateral view of a hose clamp in accordance with the invention, said figure also including a vertical sectional view through the clamp worm sleeve,

Fig. 2 is a sectional view along line II—II of Fig. 1,

Fig. 3 is a sectional view along line III—III in Fig. 1 and

Fig. 4 is an enlargement of a part of the inner strip end portion.

The hose clamp consists of a steel strip 1 which is bent to annular shape and the two end portions 1', 1'' of which are arranged in overlapping position inside a worm sleeve 2. A screw worm 3 is rotationally journalled but axially non-slidable inside the sleeve 2. The threads 4 of the screw worm engage transverse grooves 5 formed in the strip. The worm is provided with a hexagonal head 6 having a groove 7 formed therein for engagement with a screw driver. The screw worm 3 also is formed with a peripherally extending channel 8 adjacent the head 6 and a marginal portion 9 of the sleeve 2 is inserted into said channel 8 through upsetting. Owing to the upset portion inside the channel 8 the worm is prevented from moving axially relative to the sleeve 2.

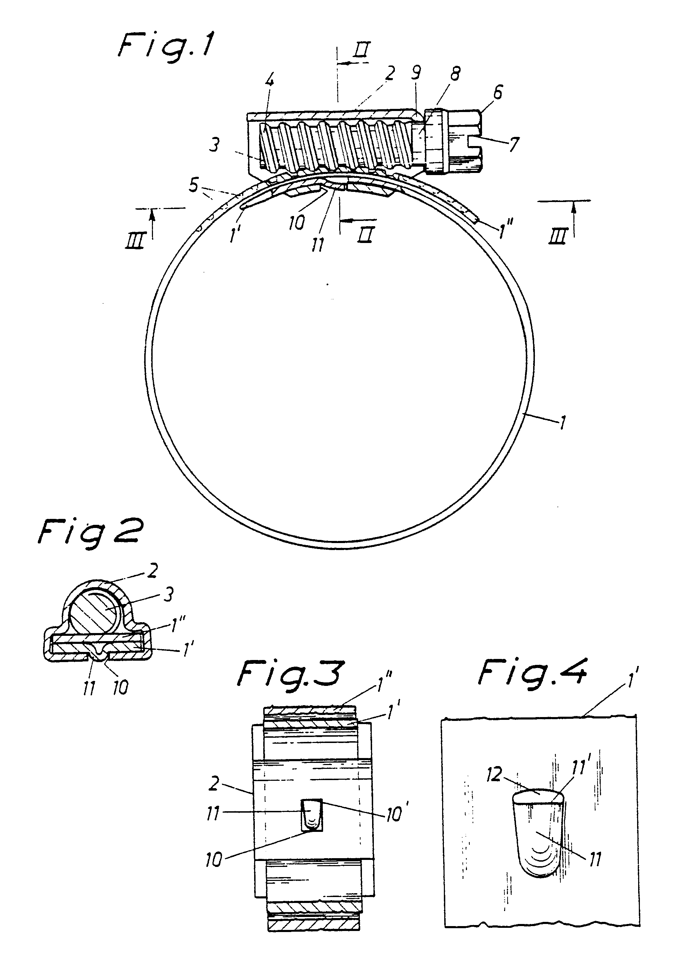

The radially inner wall of the screw worm sleeve 2 is formed with a notch 10 which is positioned in the proximity of the longitudinal axis of the screw worm 3. The notch 10 preferably is rectangular with one of its edge faces 10' extending at right angles to the lengthwise extension of the strip 1 through the sleeve 2. The inner strip end portion 1' is formed with a portion 11 which is upset to project radially inwards in engagement with the notch 10. The upset portion 11 is shown on an enlarged scale in Fig. 4. As appears from this drawing figure the upset portion 11 is formed so as to connect with a punched opening 12 in the inner strip end portion 1'. The punched opening 12 is slightly arcuate or straight-sided and its ends are rounded or part-circular. Owing to the arcuate configuration of the punched opening 12 in the manner appearing from Fig. 4 an edge face 11' is produced in the upsetting operation, which face projects essentially at right angles from the plane of the strip, which provides secure abutment against the edge face 10' of the notch. The rounded configuration of the ends of the punched portion prevents the formation of sharp fillets or indications of fractions in the course of the simultaneous or subsequent upsetting operation.

Because the notch 10 formed in the wall of the screw worm sleeve 2 is comparatively small the sleeve wall is not weakened to any significant extent. Nor does the punched opening 12 of the inner strip end portion 1' result in any significant weakening effect. The opposite side wall of the upset portion 11 may be made comparatively steep since the upset portion provides a secure abutment grip of the strip end portion relative to the worm sleeve in the opposite direction as well. The stress exerted in this opposite direction is however, as a rule, comparatively small.

The operational steps required to effect the interlocking of the strip end portion relative to the worm sleeve as described above may be effected by means of simple and automated tools operating at a very high speed.

Since the details cooperating to provide the interlocking effect are positioned in immediate proximity to the lengthwise axis of the screw worm the radially outer strip end portion 1'' together with the screw worm 3 and the radially outer part of the worm sleeve 2 form efficient holding-up means preventing the upset portion 11 from disengagement from its position inside the notch 10. Because the back-up face of the upset portion 11 is formed by one of the edges faces 11' of the punched portion this face may easily be given optimum configuration. The deformation of the inner strip end portion 1' that the rest of the upset portion 11 involves is favourable from the point of view of strength and increases the resistance of the material to stress exerted in the axial direction of the strip 1.

The design of the notch 10, the punched opening 12 and the upset portion 11 could be different from the one shown. The inner strip end portion 1' can be also provided at the two end edges of the worm sleeve 12 with bent portions in a manner known per se to provide smooth transitional areas between the inner face of the strip and the sleeve.

## Claims

1. An improved hose clamp of the kind comprising a steel strip (1) which is bent to annular shape with the end portions (1', 1'') of the strip overlapping, the radially outer end portion (1'') of the strip being formed with a threaded passageway (5) having transverse grooves in which engage the threads (4) of a screw worm (3), the latter being rotatably journalled in a sleeve (2) but axially non-slidable therein, said sleeve (2) enclosing said screw worm and comprising a space allowing the outer strip end portion (1'') to be displaced through the sleeve (2) between the inner strip end portion (1') and the screw worm (3) by rotating the latter, said inner strip end portion (1') being provided in a section across the width at the part positioned closest to the longitudinal axis of the screw worm (3) with a punched opening (12), characterized therein that the inner strip end portion (1') additionally is provided on the side of the punched opening (12) which is closest to the free end of the inner strip end portion (1') with an upset portion (11) which is so positioned in a notch (10) formed in the radially inner one of the walls of the screw worm sleeve (2) that an edge formed by said notch (10) in said screw worm sleeve wall serves as an abutment face against the edge face (11') of said upset portion (11).

2. An improved hose clamp as claimed in claim 1, characterized therein that the punched opening (12) in addition to extending in a section across the width of the inner strip end portion (1') likewise extends in the lengthwise direction of the strip end portion and is formed by two circular parts and straight or arcuate parts interconnecting the circular parts.

## Patentansprüche

1. Verbesserte Schlauchklemme von der Art, die ein Stahlband (1) umfasst, das zu einer Ringform gebogen ist, wobei die Endteile (1', 1'') des Bands überlappen, der radial aussenliegende Endteil (1'') des Bands mit einer Gewindebahn (5) mit querliegenden Rillen geformt ist, in welche das Gewinde (4) einer Schnecke (3) eingreift, diese Schnecke in einer Hülse (2) drehbar aber axial darin nicht gleitend gelagert ist, diese Hülse (2) diese Schnecke umschliesst und einen Raum umfasst, der dem aussenliegenden Endteil (1'') des Bands erlaubt, zwischen dem innenliegenden Endteil (1') des Bands und der Schnecke (3) durch Drehen derselben durch die Hülse (2) hindurch bewegt zu werden, dieser innenliegende Endteil (1') des Bands auf einem in Querrichtung liegenden Abschnitt am der Längsachse der Schnecke (3) nächstliegenden Teil mit einer ausgestanzten Öffnung (12) versehen ist, dadurch gekennzeichnet, dass der innenliegende Endteil (1') des Bands auf der dem freien Ende des innenliegenden Endteils (1') des Bands nächstliegenden Seite der ausgestanzten Öffnung (12) zusätzlich mit einem aufgerichteten Teil (11) versehen ist, der in einer in der radial innenliegenden der Wandungen des Schneckenhülse (2) geformten Kerbe (10) so angeordnet ist, dass eine von dieser Kerbe (10) in dieser Wandung des Schneckenhülse gebildete Kante als Anschlagfläche für die Kantenfläche (11') dieses aufgerichteten Teils (11) dient.

2. Verbesserte Schlauchklemme gemäss Anspruch 1, dadurch gekennzeichnet, dass sich die ausgestanzte Öffnung (12) zusätzlich dazu, dass sie sich auf einem in Querrichtung liegenden Abschnitt des innenliegenden Endteils (1') des Bands erstreckt, ebenfalls in Längsrichtung des Endteils des Bands erstreckt, und dass sie aus zwei kreisförmigen Teilen und diese kreisförmigen Teile verbindenden geraden oder bogenförmigen Teile gebildet ist.

## Revendications

1. Collier amélioré de serrage pour tuyau du genre comportant une bande d'acier (1) courbée en forme d'anneau avec superposition des portions terminales (1', 1'') des bandes, la partie terminale radialement extérieure (1'') de la bande étant formée avec un passage fileté (5) qui comporte des cannelures transversales dans lesquelles d'engagent les filets (4) d'une vis sans fin (3), celle-ci étant montée à rotation sans glissement axial dans une douille (2) qui entoure la vis sans fin et comporte un espace permettant à la partie extérieure terminale (1'') de la bande d'être déplacée à travers la douille (2) entre la partie intérieure terminale (1') de la bande et la vis sans fin (3) par rotation de cette dernière, cette partie intérieure terminale (1') de la bande étant pourvue d'une ouverture poinçonnée (12) en une section qui s'étend en direction transversale sur la partie placée le plus près de l'axe longitudinal de la vis sans fin (3), caractérisé en ce que la partie intérieure terminale (1') de la bande est en outre pourvue, sur le côté de l'ouverture poinçonnée (12) qui est le plus proche de l'extrémité libre de la partie intérieure terminale (1') de la bande, d'une partie redressée (11) placée de telle façon dans une encoche (10) formée dans la plus radialement intérieure des parois de la douille (2) de la vis sans fin qu'un chant formé par cette encoche (10) dans cette douille de la vis sans fin sert de face de butée contre la face de chant (11') de cette partie redressée (11).

2. Collier amélioré de serrage pour tuyau selon la revendication 1, caractérisé en ce que, outre qu'elle s'étend en une section qui s'étend en direction transversale de la partie intérieure terminale (1') de la bande, l'ouverture poinçonnée (12) s'étend de façon similaire en direction longitudinale de la partie terminale de la bande et est formée de deux parties circulaires et de parties droites ou courbes qui relient entre elles les parties circulaires.

Fig.1

Fig 2

Fig.3

Fig.4